# EUROPEAN PATENT APPLICATION

(11) **EP 1 479 589 A2**
(43) Date of publication of application: **24.11.2004**
(21) Application number: 04252835.6
(22) Date of filing: 15.05.2004
(51) Int. Cl.: B62B 1/10

(54) **Trolley**

(30) Priority: 19.05.2003 GB 0311497
(71) Applicant: Wilson, David Robert Alexander, Northallerton, North Yorkshire DL7 8NL (GB)
(72) Inventor: Wilson, David Robert Alexander, Northallerton, North Yorkshire DL7 8NL (GB)
(74) Representative: Hughes, Brian Patrick

(57) **Abstract**

A trolley has a load carrying platform 12, a lifting toe 34 extending upwardly from the platform 12 at one end, the front end, of the platform, at least one wheel 14 adjacent the front end of the platform, and a curved member 36 extending back from the bottom of the lifting toe 34 towards the wheel or wheels 14.

## Description

This invention relates to a trolley such as is used to transport heavy or bulky loads.

Trolleys of this general type, such as the well known porter's trolley, are widely used and rely, when picking up a load, on the operator's strength to pivot the trolley with it's load about the wheels of the trolley. This can be difficult with a heavy load and indeed can cause injury to the user.

It is an object of the present invention to obviate or mitigate this problem.

The present invention is a trolley having a load carrying platform, a lifting toe extending upwardly from the platform at one end, the front end, of the platform, at least one wheel adjacent the front end of the platform, and a curved member extending back from the bottom of the lifting toe towards the wheel or wheels.

Preferably there are two wheels, one at each side of the trolley.

Preferably, a transversely extending foot plate is provided beneath the platform at the rear of the wheels.

The curved member may be a metal plate.

More than one curved member in the form of curved bars may be provided.

Preferably, at least one handle is provided at the rear end of the trolley.

Embodiments of the present invention will now be described, by way of example, with reference to the accompanying drawings, in which:-
Fig. 1 is a front view of a trolley according to the present invention;

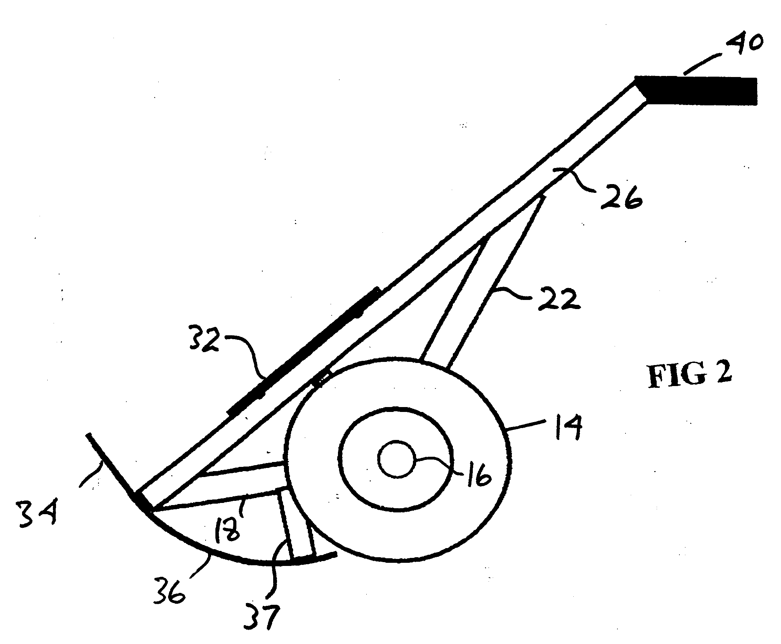

Fig. 2 is a side view of the trolley of Fig 1; and

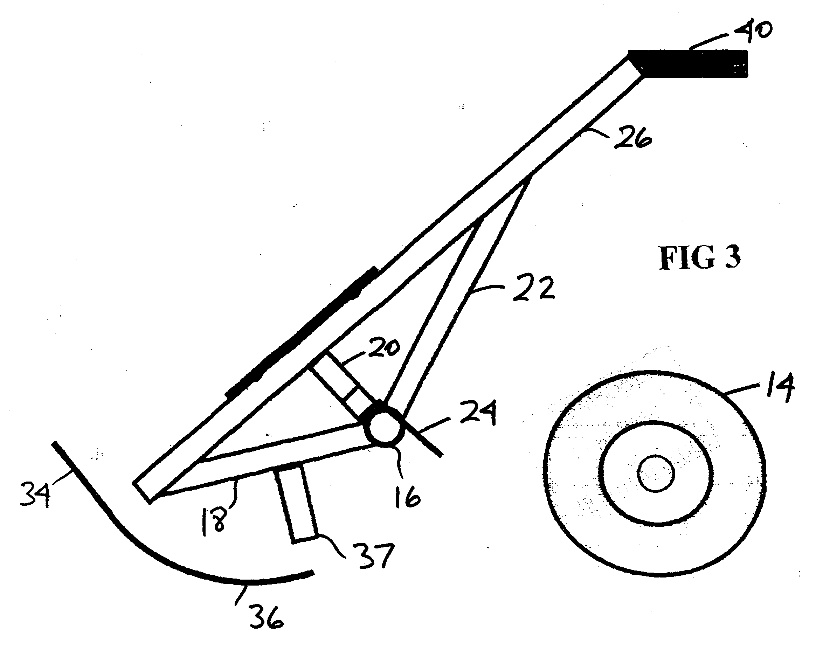

Fig 3 is a side view similar to Fig 2 but with some parts removed to show more clearly the construction of the trolley.

Referring now to the drawings, a trolley according to the present invention has a platform 12 for supporting a load and a pair of wheels 14, one at each side of the platform 12, mounted beneath the platform on an axle 16 carried by a support at each side, each support comprising a front member 18, a middle member 20 and a rear member 22. A foot plate 24 extends between the axle supports behind the axle.

The platform 12 is defined by metal bars, there being two side bars 26, to which the support members are secured, a central bar 28 parallel to the side bars, and three transverse bars 30 secured, in this embodiment by welding, to the side bars and the central bar. At the sides of the platform, above the wheels are provided wheel guards 32.

At the front of the platform is provided a lifting toe 34 in the form of a metal plate which extends across and upwardly from the platform 12. Beneath the platform 12 the lifting toe is extended in a smooth curve back towards the wheels by a member 36. The rear of the 36 is supported by members 37 secured to the members 18. The side bars 26 extend back beyond the rear of the platform 12 and are terminated by handles 40.

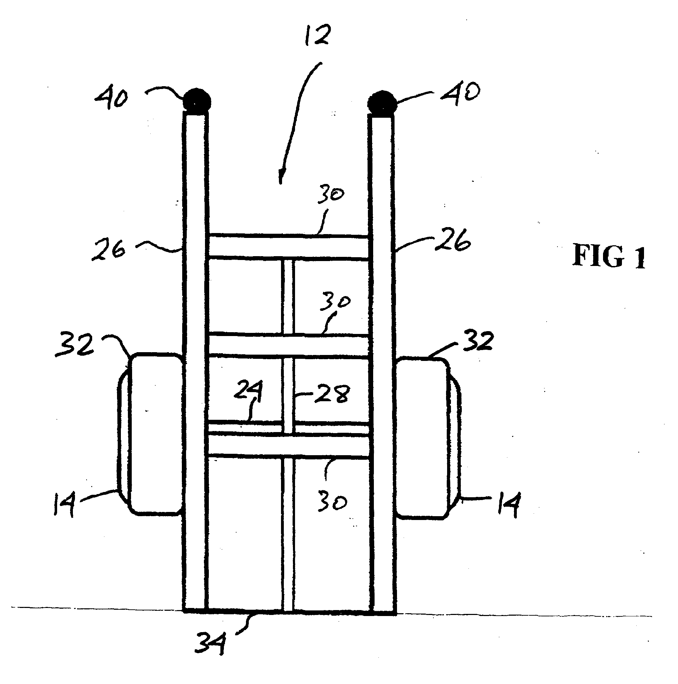

In use, the trolley is moved to a load and the lifting toe 34 is inserted beneath the load, the wheels 14 at this time being off the ground as shown in Fig 1. From this position, the operator, standing on the foot plate 24 if necessary, can pull back on the load, or on the handles 40 to cause the trolley to rotate on the curved member 36 until the wheels 14 come into contact with the ground so that the user can then move the trolley and the load. It should be noted that the force required to rotate the trolley on the member 36 is less than that required with known trolleys which rotate about the contact points of their wheels with the ground, i.e. some distance below the platform.

The embodiment described may be modified, for example by having a single wheel or a single handle extending across between the ends of the side bars. If a short trolley is desired then the handles could be dispensed with altogether, the loaded trolley then being manoeuvred by pushing or pulling the load itself.

In another modification, the curved member 36 may be integral with the lifting toe 34 or these may be separate components. Also, the sheet forming the toe 34 and/or the member 36 could be perforated, and indeed the member 36 could be replaced by two or more transversely spaced curved bars.

The transverse bars 30 may be curved to provide a concave platform rather than a plane one, or may be shaped to match the outline of a specific load. Also, means such as straps or clamps, may be provided to secure loads on the platform.

The side bars can be made adjustable in length, e.g. by being telescopic, to suit particular loads and/or operators, and stabilising wheels or legs may be provided.

## Claims

1. A trolley having a load carrying platform, a lifting toe extending upwardly from the platform at one end, the front end, of the platform, at least one wheel adjacent the front end of the platform, and a curved member extending back from the bottom of the lifting toe towards the wheel or wheels.

2. A trolley as claimed in claim 1, in which there are two wheels, one at each side of the trolley.

3. A trolley as claimed in claim 1 or claim 2, in which a transversely extending foot plate is provided beneath the platform at the rear of the or each wheel.

4. A trolley as claimed in any preceding claim, in which the curved member is a metal plate.

5. A trolley as claimed in any of claims 1 to 3, in which more than one curved member is provided.

6. A trolley as claimed in claim 5, in which the curved members are bars.

7. A trolley as claimed in any preceding claim, in which at least one handle is provided at the rear end of the trolley.
